# EUROPEAN PATENT APPLICATION

(11) **EP 3 984 781 A1**
(43) Date of publication of application: **20.04.2022**
(21) Application number: 21200747.0
(22) Date of filing: 04.10.2021
(51) Int. Cl.: B60C 15/00, B60C 15/06

(54) **SIDEWALL CONSTRUCTION FOR A TIRE**

(30) Priority: 14.10.2020 US 202017070027
(71) Applicant: The Goodyear Tire & Rubber Company, Akron, Ohio 44316 (US)
(72) Inventor: REICHLING, Gilles, L-9189 Vichten (LU); LEYSSENS, Jan Frans, B-6860 Leglise-Beheme (BE); PLETSCHETTE, Pascal, L-7346 Mullendorf (LU); DE WIT, Hendrikus Lambertus Johannes Maria, L-9283 Diekirch (LU); WELBES, Paul, L-9184 Schrondweiler (LU)
(74) Representative: Goodyear IP Law

(57) **Abstract**

A tire comprising a bead portion (5) is disclosed. The bead portion (5) comprises a bead core (10); a first bead filler (20) located at a radially outer side of the bead core (10); a carcass layer (30) extending around the bead core (10) and the first bead filler (20), the carcass layer (30) extending radially inward adjacent an axially inner side of the bead core (10), extending axially outward adjacent a radially inner side of the bead core (10), and extending radially outward adjacent an axially outer side of the bead core (10); a second bead filler (40) extending both axially and radially along or beyond the first bead filler (20), the second bead filler (40) overlapping the first bead filler (20) with a radially outer end portion (43) of the second bead filler (40) being preferably positioned radially outward from the first bead filler (20); a first chafer (50) disposed at an axially outer side of the second bead filler (40); a second chafer (80) extended about a radially inner end of the carcass layer (30); and a flipper (70) extending radially inward from a position axially adjacent an axially outer side of the first bead filler (20). The second bead filler (40) is located or embedded at a convergence of the first chafer (50) and a sidewall portion (7, 60) of the tire (1).

## Description

### Field of the Invention

The present invention relates to a tire provided with an improved sidewall/bead construction.

### Background of The Invention

A factor for reducing the endurance of a bead unit includes delamination (separation) between a carcass and a rubber member contacting the outer side in the tread width direction of the carcass. One factor causing the separation may be stress generated by upthrust from a rim. Due to this stress, shear strain may cause delamination between the carcass and the bead.

In recent years, with an increased awareness for environmental concerns, the reduction of the tire weight has been desired. By reducing the tire weight, it may be possible to reduce rolling resistance, resulting in the reduction of fuel consumption. A tire with the aforementioned structure may increase tire weight. By shortening a bead filler as compared with a standard bead filler, reduction of the bead weight may still be possible. In a tire with a shortened bead filler, since stress generated by curvature and deformation of a side wall portion acts toward the vicinity of a front end portion of the shortened bead filler, separation may occur near the front end portion of the bead filler. In this regard, another reinforcing member, or flipper, may be provided at the outer side in the tire radial direction of the bead core and bead filler.

### Summary of the Invention

The invention relates to a tire in accordance with claim 1 and to a method in accordance with claim 11.

Dependent claims refer to preferred embodiments of the invention.

A bead portion of a tire in accordance with a preferred aspect of the present invention includes: a bead portion of a tire including a bead core; a first bead filler arranged at a radially outer side of the bead core; a carcass extending around the bead core and the first bead filler and radially inward adjacent an axially inner side of the bead core, the carcass further extending axially outward adjacent a radially inner side of the bead core and radially outward adjacent an axially outer side of the bead core; a second bead filler extending both axially and radially beyond the first bead filler, the second bead filler overlapping the first bead filler, an outermost end of the second bead filler being positioned radially outward from the first bead filler; a first chafer disposed at an axially outer side of the second bead filler; a second chafer extended about a radially inner end of the first carcass; and a flipper extending radially inward from a position axially adjacent an axially outer side of the first bead filler. The second bead filler is embedded at a convergence of the first chafer and a sidewall of the tire.

According to another preferred aspect of the invention, the second bead filler extends both axially and radially beyond a first bead filler outer end portion.

According to still another preferred aspect of the invention, the second bead filler overlaps a first bead filler outer end portion.

According to yet another preferred aspect of the invention, a radially outermost end of the second bead filler outer end portion is positioned at the first bead filler outer end portion.

According to still another preferred aspect of the invention, a radially inner end portion of the second bead filler is positioned at a radially outer side of the bead core.

According to yet another preferred aspect of the invention, a radially inner end portion of the second bead filler is positioned at a radially outermost surface of the bead core.

According to still another preferred aspect of the invention, the second bead filler contacts the carcass.

According to yet another preferred aspect of the invention, the second bead filler contacts the first chafer.

According to still another preferred aspect of the invention, the second bead filler is embedded at a convergence of a radially outer portion of the first chafer and a radially inner portion of the side rubber layer.

According to yet another preferred aspect of the invention, the first bead filler, the second bead filler, and the flipper further decrease rolling resistance of the tire.

A method in accordance with a preferred aspect of the present invention stiffens a bead portion of a tire. The method includes the steps of: arranging a first bead filler at a radially outer side of a bead core; extending a carcass around the bead core and the first bead filler; extending the carcass radially inward adjacent an axially inner side of the bead core; extending the carcass axially outward adjacent a radially inner side of the bead core; extending the carcass radially outward adjacent an axially outer side of the bead core; arranging a second bead filler both axially and radially beyond the first bead filler; overlapping the first bead filler with the second bead filler; positioning an outermost end of the second bead filler radially outward from the first bead filler; arranging a first chafer at an axially outer side of the second bead filler; and embedding the second bead filler at a convergence of the first chafer and a sidewall of the tire.

### Definitions

As used herein and in the claims:
"Apex" means an elastomeric filler located radially above the bead core and between the plies and the turnup ply.
"Axial" and "axially", or "in a tread width direction", refer to lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design rim.
"Chipper" refers to a relatively narrow band of fabric or steel cords located in the bead area whose function is to reinforce the bead area and stabilize the radially inwardmost part of the sidewall.
"Circumferential" and "circumferentially" mean lines or directions extending along the perimeter of the surface of the annular tire parallel to the equatorial plane (EP) and perpendicular to the axial direction; it can also refer to the direction of the sets of adjacent circular curves whose radii define the axial curvature of the tread, as viewed in cross section.
"Equatorial plane (EP)" means the plane perpendicular to the tire's axis of rotation and passing through the center of its tread; or the plane containing the circumferential centerline of the tread.
"Flipper" refers to a reinforcing fabric around the bead core for strength and to tie the bead core in the tire body.
"Inner" means toward the inside of the tire and "outer" means toward its exterior.
"Inboard side" means the side of the tire nearest the vehicle when the tire is mounted on a wheel and the wheel is mounted on the vehicle.
"Lateral" means an axial direction.
"Outboard side" means the side of the tire farthest away from the vehicle when the tire is mounted on a wheel and the wheel is mounted on the vehicle.
"Radial" and "radially" mean directions radially toward or away from the axis of rotation of the tire.
"Sidewall" means that portion of a tire between the tread and the bead.
"Turnup end" means the portion of a carcass ply that turns upward (i.e., radially outward) from the beads about which the ply is wrapped.

### Brief Description of Drawings

FIG. 1 is a schematic cross-sectional view along a tire radial direction and a tread width direction of a tire in accordance with the present invention.
FIG. 2 is an enlarged cross-sectional view of part of the tire of FIG. 1.

### Description of Preferred Embodiments of The Present Invention

In the following description of the drawings, the same or similar reference numerals are used to designate the same or similar parts. It may be appreciated that the drawings are schematically shown and the ratio and the like of each dimension may be different from these examples. Therefore, the specific dimensions must be determined in view of the below explanation. It is needless to say that relations and ratios among the respective dimensions may differ among the diagrams.

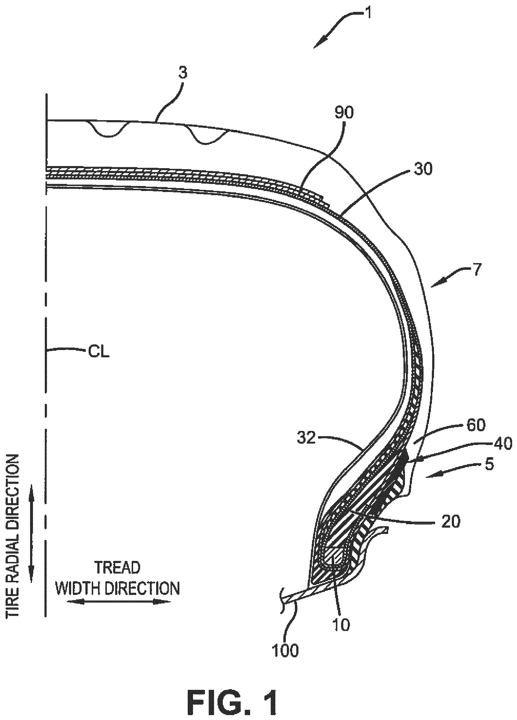

FIG. 1 shows a cross sectional view of a pneumatic or non-pneumatic tire 1 along a tire radial direction and a tread width direction of the tire in accordance with the present invention. Preferably, the tire 1 is a pneumatic tire. The tire 1 is configured for being mounted on a standard rim 100. The tire 1 may have a normal inner pressure and is configured to support a normal load. The tire 1 includes a tread portion 3, a bead portion 5, and a side wall portion 7. The tread portion 3 is configured to contact a road surface (not shown).

The tire 1 further includes two bead portions 5 (one shown), a carcass layer 30, a side rubber layer 60, and preferably also a belt portion 90. The carcass 30 is preferably arranged throughout the tread portion 3, the bead portion 5, and the side wall portion 7. The carcass 30 preferably extends between a pair of the bead cores 10 (one shown) and a pair of the first bead fillers 20 (one shown). The carcass 30 preferably curves radially inward to the axially inner side of the bead cores 10 and the first bead fillers 20 and wrap around the axially outer sides of the bead cores 10. Second bead fillers 40 (one shown) are arranged at the axially outer side of the carcass 30.

The example bead portion 5 is configured to be attached to, or in contact with, the rim 100.

The side wall portion 7 interconnects the tread portion 3 and the bead portion 5.

The bead portion(s) 5 include a bead core 10, a first bead filler 20, a second bead filler 40, a first chafer 50, a flipper 70, and a second chafer 80.

The bead core 10 allows the attachment of the tire 1 to the rim 100. The bead core 10 is preferably constructed of bead wire (not shown). The first bead filler 20 is arranged at the radially outer side of the bead core 10. The first bead filler 20 preferably has an approximate triangular shape.

The first chafer 50 is arranged at the axially outer side of the bead portion 5. More specifically, the first chafer 50 is arranged at the axially outer side the carcass 30 and the second bead filler 40.

The side rubber layer 60 of the side wall portion 7 is arranged at the axially outer side of the carcass 30.

The second chafer 80 extends axially between the carcass 30 and an innerliner 32. The second chafer 80 is configured to prevent toe chipping at the rim 100.

The belt layer 90 may be arranged in the tread portion 3 at the axially outer side of the carcass 30. The belt layer 90 may include, for example, two belts.

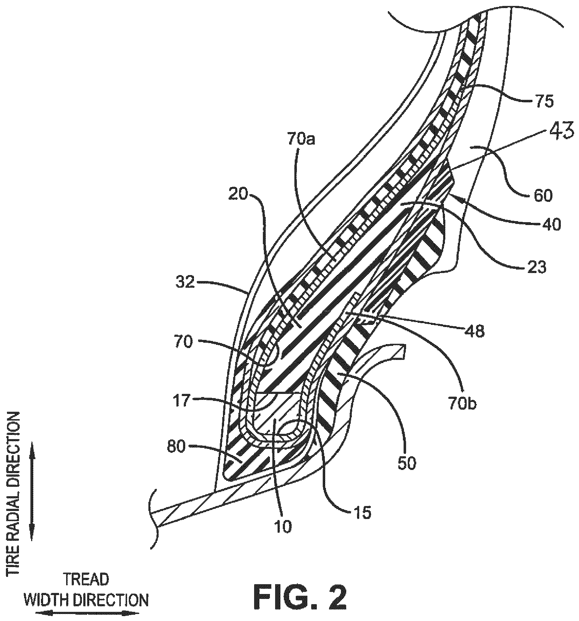

As shown in FIG. 2, the bead portion 5 includes the bead core 10, the first bead filler 20, the carcass layer 30, the innerliner 32, the second bead filler 40, the first chafer 50, the flipper 70, and the second chafer 80. The bead core 10 has a bead core-innermost surface 15 which is an innermost surface of the bead core 10 in the tire radial direction. Further, the bead core 10 has have a bead core-outermost surface 17 which is an outermost surface of the bead core 10 in the tire radial direction.

The first bead filler 20 has a first bead filler radially outer end portion 23 which is an outer end portion in the tire radial direction of the first bead filler 20.

As illustrated in FIG. 2, the thickness of the first bead filler outer end portion 23 is reduced toward the outer side in the tire radial direction, that is, the first bead filler outer end portion, which is an outermost end of the first bead filler 20 in the tire radial direction. An inner end portion in the tire radial direction of the first bead filler 20 preferably contacts the bead core 10.

The second bead filler 40 is positioned at the outer side in the tread width direction from the axially outer carcass side. The second bead filler 40 has a second bead filler outer end portion 43, which is an outer end portion in the tire radial direction, and a second bead filler inner end portion 48, which is an inner end portion in the tire radial direction.

As illustrated in FIG. 2, the axial thickness of the second bead filler 40 is reduced toward the respective end portion 43, 48 of the second bead filler 40 in the tire radial direction from the center of the second bead filler 40 in the tire radial direction. That is, the axial thicknesses of the second bead filler outer end portion 43 and the second bead filler inner end portion 48 is thinner than the axial thickness second bead filler 40 at the radial center of the second bead filler 40.

The flipper 70 wraps around the bead core 10 and extends radially outward from the radially inner side of the bead core 10. In the tread width direction, the flipper layer 70 has an axially inner layer 70a positioned at the inner side of the bead core 10 and an axially outer layer 70b positioned at the outer side of the bead core 10. A radially outer end 75 of the axially inner layer 70a extends radially outward to a position axially adjacent the carcass layer 30 and the first bead filler outer end portion 23. The radially outer end 75 of the axially outer layer 70b extends radially outward to a position adjacent the first bead filler 20.

The flipper 70 increases cornering stiffness of tire 1 thereby enhancing dynamic operating conditions, such as ride and handling performance of the tire. Further, such a flipper 70 may provide little or no negative impact to rolling resistance of the tire 1 or other factors, such as manufacturing complexity and cost.

In accordance with the present invention, the second bead filler 40 extends both axially and radially beyond the first bead filler outer end portion 23 in the tread width direction. Accordingly, the second bead filler 40 overlaps the first bead filler outer end portion 23 in the tread width direction. An outermost end of the second bead filler outer end portion 43 in the tire radial direction is positioned at the outer side in the tire radial direction radially outward from the first bead filler outer front end portion23. The second bead filler inner end portion 48 is positioned at a radially outer side of the bead core 10. Accordingly, the second bead filler inner end portion 48 is positioned at the outer side in the tire radial direction from the bead core-outermost surface 17. The second bead filler 40 contacts the carcass layer 30 at its axially inner side in the tread width direction. The second bead filler 40 contact the rubber chafer 50 at its axially outer side in the tread width direction.

The second bead filler 40 is embedded at a convergence of the radially outer portion of the first chafer 50 and the radially inner portion of the side rubber layer 60. The second bead filler 40 thus provide robust load capacity and durability for the bead portion 5. The robust combination of the first bead filler 20, the second bead filler 40, and the flipper 70 also decrease rolling resistance of the overall tire 1.

## Claims

1. A tire comprising a bead portion (5), the bead portion (5) comprising:
a bead core (10):
a first bead filler (20) located at a radially outer side of the bead core (10);
a carcass layer (30) extending around the bead core (10) and the first bead filler (20), the carcass layer (30) extending radially inward adjacent an axially inner side of the bead core (10), extending axially outward adjacent a radially inner side of the bead core (10), and extending radially outward adjacent an axially outer side of the bead core (10);
a second bead filler (40) extending both axially and radially along or beyond the first bead filler (20), the second bead filler (40) overlapping the first bead filler (20) with a radially outer end portion (43) of the second bead filler (40) being preferably positioned radially outward from the first bead filler (20);
a first chafer (50) disposed at an axially outer side of the second bead filler (40);
a second chafer (80) extended about a radially inner end of the carcass layer (30); and
a flipper (70) extending radially inward from a position axially adjacent an axially outer side of the first bead filler (20);
the second bead filler (40) being located or embedded at a convergence of the first chafer (50) and a sidewall portion (7, 60) of the tire (1).

2. The tire of claim 1 wherein the second bead filler (40) extends both axially and radially beyond a first bead filler outer end portion (23).

3. The tire of claim 1 or 2 wherein the second bead filler (40) overlaps a first bead filler outer end portion (23).

4. The tire of at least one of the previous claims wherein a radially outermost end of the second bead filler outer end portion (43) is positioned at the first bead filler outer end portion (23).

5. The tire of at least one of the previous claims wherein a radially inner end portion of the second bead filler (40) is positioned at a radially outer side of the bead core (10).

6. The tire of at least one of the previous claims wherein a radially inner end portion of the second bead filler (40) is positioned at a radially outermost surface of the bead core (10).

7. The tire of at least one of the previous claims wherein the second bead filler (40) contacts the carcass layer (30).

8. The tire of at least one of the previous claims wherein the second bead filler (40) contacts the first chafer (50).

9. The tire of at least one of the previous claims wherein the second bead filler (40) is located or embedded at a convergence of a radially outer portion of the first chafer (50) and a radially inner portion of the sidewall portion (7, 60).

10. The tire of at least one of the previous claims wherein the axial thickness of the second bead filler (40) is reduced toward the respective end portion (43, 48) of the second bead filler (40) in the tire radial direction from the center of the second bead filler (40) and/or that the axial thicknesses of the second bead filler radial outer end portion (43) and of the second bead filler radial inner end portion (48) is thinner than the axial thickness second bead filler (40) at the radial center of the second bead filler (40).

11. A method for stiffening a bead portion (5) of a tire (1), the method comprising the steps of:
arranging a first bead filler (20) at a radially outer side of a bead core (10);
extending a carcass layer (30) around the bead core (10) and the first bead filler (20);
extending the carcass layer (30) radially inward adjacent an axially inner side of the bead core (10);
extending the carcass layer (30) axially outward adjacent a radially inner side of the bead core (10);
extending the carcass layer (10) radially outward adjacent an axially outer side of the bead core (10);
arranging a second bead filler (40) both axially and radially along or beyond the first bead filler (20);
overlapping the first bead filler (20) with the second bead filler (40);
positioning an outermost end of the second bead filler (40) radially outward from the first bead filler (20);
arranging a first chafer (50) at an axially outer side of the second bead filler (40); and
locating or embedding the second bead filler (40) at a convergence of the first chafer (50) and a sidewall portion (7, 60) of the tire (1).

12. The method of claim 11 further including the step of extending a second chafer (80) about a radially inner end of the carcass layer (30).

13. The method of claim 11 or 12 further including the step of extending a flipper (70) radially inward from a position axially adjacent an axially outer side of the first bead filler (20).

14. The method as set forth in claim 13 further including the step of extending the flipper (70) axially inward adjacent a radially inner side of the bead core (10).

15. The method as set forth in claim 13 or 14 further including the step of extending the flipper (70) radially outward to a position axially adjacent two separate parts the carcass layer (30) and a radially outermost end of the first bead filler (20).
